# EUROPÄISCHE PATENTANMELDUNG

(11) **EP 3 181 337 A1**
(43) Veröffentlichungstag der Anmeldung: **21.06.2017**
(21) Anmeldenummer: 16202731.2
(22) Anmeldetag: 07.12.2016
(51) Int. Cl.: B29C 67/00, B33Y 30/00, B22F 3/105

(54) **3D-DRUCK-VORRICHTUNG FÜR DIE HERSTELLUNG EINES RÄUMLICH AUSGEDEHNTEN PRODUKTS**

(30) Priorität: 17.12.2015 DE 102015122130; 15.04.2016 DE 102016107052
(71) Anmelder: Lilas GmbH, 44319 Dortmund (DE)
(72) Erfinder: Lissotschenko, Vitalij, 58730 Fröndenberg (DE)
(74) Vertreter: Basfeld, Rainer

(57) **Zusammenfassung**

3D-Druck-Vorrichtung für die Herstellung eines räumlich ausgedehnten Produkts, umfassend mindestens eine Laserlichtquelle, aus der eine Laserstrahlung (1 , 1', 1 ") austreten kann, einen Arbeitsbereich (4), dem mit Laserstrahlung (1 , 1', 1 ") zu beaufschlagendes Ausgangsmaterial für den 3D-Druck zugeführt wird oder werden kann, wobei der Arbeitsbereich (4) derart in der 3D-Druck-Vorrichtung angeordnet ist, dass die Laserstrahlung (1 , 1', 1") auf den Arbeitsbereich (4) auftrifft, sowie Scannmittel, die insbesondere als bewegliche Spiegel (2, 12, 13) ausgebildet sind, wobei die Scanmittel die Laserstrahlung (1 , 1', 1 ") gezielt gewünschten Orten in dem Arbeitsbereich (4) zuführen können, wobei die mindestens eine Laserlichtquelle so gestaltet ist, dass im Betrieb der Vorrichtung mehrere Auftreffpunkte oder Auftreffbereiche der Laserstrahlung beabstandet zueinander auf dem Arbeitsbereich (4) erzeugt werden.

## Beschreibung

Die vorliegende Erfindung betrifft eine 3D-Druck-Vorrichtung für die Herstellung eines räumlich ausgedehnten Produkts gemäß dem Oberbegriff des Anspruchs 1.

Bei herkömmlichen 3D-Druck-Vorrichtungen wird beispielsweise mittels eines Laserstrahls punktförmig ein pulverförmig zugeführtes Ausgangsmaterial mit einer derartigen Energiemenge beaufschlagt, dass ein Prozess, wie beispielsweise ein Aufschmelzen oder Sintern des Ausgangsmaterials, an dem beaufschlagen Ort initiiert wird, wobei dieser Prozess zu einer Verbindung der Körner des Ausgangsmaterials führt. Durch rasterartiges Scannen des Laserstrahls über den Arbeitsbereich wird dadurch schichtweise das herzustellende Produkt erzeugt.

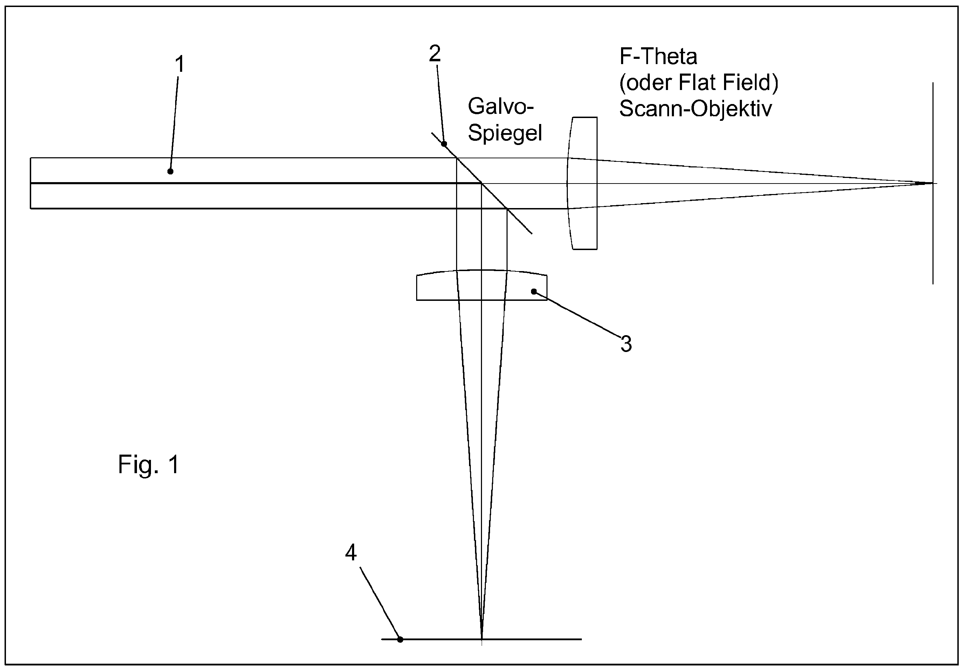

Eine Vorrichtung der eingangs genannten Art ist beispielsweise aus Sabina Luisa Campanelli, Nicola Contuzzi, Andrea Angelastro and Antonio Domenico Ludovico (2010), Capabilities and Performances of the Selective Laser Melting Process, New Trends in Technologies: Devices, Computer, Communication and Industrial Systems, Meng Joo Er (Ed.), ISBN: 978-953-307-212-8, InTech (siehe auch unter: http://www.intechopen.com/books/new-trends-in-technologies-devices--computer--communication-and-industrial-systems/capabilities-and-performances-of-the-selective-laser-meltingprocess) bekannt. Ein Teil einer bekannten Vorrichtung ist schematisch in Fig. 1 dargestellt.

Dort trifft von links ein kollimierter Laserstrahl 1 auf zwei bewegbare Spiegel 2, von denen lediglich einer abgebildet ist. Die beiden Spiegel 2 lenken die Laserstrahlung 1 in zwei zueinander senkrechten Richtungen ab, um ein Scannen in zwei voneinander unabhängigen Richtungen in der Arbeitsebene 4 zu ermöglichen. Die Spiegel können beispielsweise als Galvanospiegel ausgebildet sein. Von den Spiegeln wird die Laserstrahlung über als F-Theta-Objektiv ausgebildete Optikmittel 3 auf eine Arbeitsebene 4 gelenkt, so dass die Fokusebene der Laserstrahlung 1 im Wesentlichen in der Arbeitsebene 4 liegt. Die Spiegel 2 können dabei die Laserstrahlung gezielt zu Punkten in der Arbeitsebene 4 führen, in denen ein beispielsweise pulverförmiges Ausgangsmaterial mit der Laserstrahlung beaufschlagt werden soll. Die Spiegel 2 und die Optikmittel 3 sind in der Regel in Standard-Laserköpfen zusammengefasst.

Nachteilig bei dieser 3D-Druck-Vorrichtung ist es, dass für die Herstellung größerer Produkte durch das punktweise Abscannen der Arbeitsebene eine unter Umständen sehr lange Zeit benötigt wird.

Das der vorliegenden Erfindung zugrunde liegende Problem ist die Schaffung einer 3D-Druck-Vorrichtung, die effektiver, insbesondere schneller als die aus dem Stand der Technik bekannten Vorrichtungen ist.

Dies wird erfindungsgemäß durch eine 3D-Druck-Vorrichtung der eingangs genannten Art mit den kennzeichnenden Merkmalen des Anspruchs 1 gelöst. Die Unteransprüche betreffen bevorzugte Ausgestaltungen der Erfindung.

Gemäß Anspruch 1 ist vorgesehen, dass die mindestens eine Laserlichtquelle so gestaltet ist, dass im Betrieb der Vorrichtung mehrere Auftreffpunkte oder Auftreffbereiche der Laserstrahlung beabstandet zueinander auf dem Arbeitsbereich erzeugt werden.

Dabei kann vorgesehen sein, dass im Betrieb der 3D-DruckVorrichtung durch die mehreren zueinander beabstandeten Auftreffpunkte oder Auftreffbereiche der Laserstrahlung in dem Arbeitsbereich gleichzeitig an mehreren Stellen das pulverförmige Ausgangsmaterial verfestigt wird. Auf diese Weise wird die Zeit zur Herstellung des Produkts reduziert.

Es besteht die Möglichkeit, dass die Scannmittel mindestens einen beweglichen und mindestens einen nicht beweglichen Spiegel umfassen, insbesondere wobei der mindestens eine bewegliche Spiegel größer als der mindestens eine nicht bewegliche Spiegel ist.

Es kann vorgesehen sein, dass die 3D-Druck-Vorrichtung mindestens zwei Laserlichtquellen umfasst, aus denen jeweils eine Laserstrahlung austreten kann, insbesondere wobei die Austrittsflächen der mindestens zwei Laserlichtquellen in einer Ebene senkrecht zu der mittleren Ausbreitungsrichtung der Laserstrahlungen beabstandet zueinander sind. Es kann erreicht werden, dass die Laserstrahlungen der mindestens zwei Laserlichtquellen gleichzeitig gezielt in die Arbeitsebene eingebracht werden können, so dass sich die Bearbeitungszeit entsprechend verringert.

Es besteht die Möglichkeit, dass die Scannmittel eine Mehrzahl von nicht beweglichen Spiegeln umfassen, wobei jeder der Laserstrahlungen mindestens einer der nicht beweglichen Spiegel zugeordnet ist
Es kann vorgesehen sein, dass die Scannmittel ein oder mehrere bewegliche Spiegel umfassen, von denen im Betrieb der 3D-DruckVorrichtung mehrere der Laserstrahlungen, insbesondere sämtliche der Laserstrahlungen, abgelenkt werden. Auf diese Weise können beispielsweise ein oder zwei große bewegliche Spiegel vorgesehen werden, von denen mehrere der Laserstrahlungen, insbesondere sämtliche der Laserstrahlungen abgelenkt werden. Die großen Spiegel können relativ unempfindlich gegenüber großen Laserleistungen sein. Weiterhin können für die Bewegung der großen Spiegel andere Bewegungssysteme als Galvanoaktuatoren verwendet werden, so dass das System insgesamt robuster und kostengünstiger werden kann.

Es kann vorgesehen sein, dass die Scannmittel so gestaltet sind, dass die Auftreffpunkte oder Auftreffbereiche der Laserstrahlung auf dem Arbeitsbereich in der Richtung bewegt werden können, in der die Auftreffpunkte oder Auftreffbereiche der Laserstrahlung nebeneinander angeordnet sind. Durch diese Bewegung wird ein mit Laserstrahlung zu beaufschlagender Bereich des Arbeitsbereichs mehrere Male kurz nacheinander mit Laserstrahlung beaufschlagt. Dadurch kann die Einwirkungsdauer des einzelnen Fokuspunkts verkleinert werden, weil durch die sukzessive Beaufschlagung trotzdem ausreichend Energie in den Bereich eingebracht werden kann, um das Ausgangsmaterial beispielsweise aufzuschmelzen. Auf diese Weise kann die Geschwindigkeit, mit der die Fokuspunkte über die Arbeitsebene bewegt werden, vergrößert werden. Insgesamt kann damit ebenfalls die Bearbeitungszeit verringert werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine schematische Darstellung einer 3D-Druck-Vorrichtung gemäß dem Stand der Technik;
- Fig. 2: eine schematische Darstellung einer ersten Ausführungsform einer erfindungsgemäßen 3D-Druck-Vorrichtung;
- Fig. 3: eine schematische Darstellung einer Mehrzahl von Laserlichtquellen für eine erfindungsgemäße 3D-Druck-Vorrichtung;
- Fig. 4: eine schematische Darstellung zur Verdeutlichung der Funktion der erfindungsgemäßen 3D-Druck-Vorrichtung gemäß Fig. 2;
- Fig. 5: eine schematische Darstellung einer zweiten Ausführungsform einer erfindungsgemäßen 3D-Druck-Vorrichtung;
- Fig. 6: eine schematische Darstellung einer dritten Ausführungsform einer erfindungsgemäßen 3D-Druck-Vorrichtung;
- Fig. 7a: eine schematische Darstellung einer ersten Anordnung von Austrittsflächen der Mehrzahl von Laserlichtquellen für eine erfindungsgemäße 3D-Druck-Vorrichtung;
- Fig. 7b: eine schematische Darstellung einer zweiten Anordnung von Austrittsflächen der Mehrzahl von Laserlichtquellen für eine erfindungsgemäße 3D-Druck-Vorrichtung;
- Fig. 7c: eine schematische Darstellung einer dritten Anordnung von Austrittsflächen der Mehrzahl von Laserlichtquellen für eine erfindungsgemäße 3D-Druck-Vorrichtung;
- Fig. 7d: eine schematische Darstellung einer vierten Anordnung von Austrittsflächen der Mehrzahl von Laserlichtquellen für eine erfindungsgemäße 3D-Druck-Vorrichtung;
- Fig. 8: eine schematische Darstellung einer ersten Anordnung von Fokuspunkten in der Arbeitsebene für eine erfindungsgemäße 3D-Druck-Vorrichtung;
- Fig. 9: eine schematische Darstellung einer zweiten Anordnung von Fokuspunkten in der Arbeitsebene für eine erfindungsgemäße 3D-Druck-Vorrichtung;
- Fig. 10: eine schematische Darstellung einer vierten Ausführungsform einer erfindungsgemäßen 3D-Druck-Vorrichtung;
- Fig. 11: eine Fig. 5 entsprechende Darstellung der zweiten Ausführungsform mit eingezeichneter Bewegung der Fokuspunkte in der Arbeitsebene;
- Fig. 12: eine Fig. 10 entsprechende Darstellung der vierten Ausführungsform mit eingezeichneter Bewegung der Fokuspunkte in der Arbeitsebene.

In den Figuren sind gleiche und funktional gleiche Teile mit gleichen Bezugszeichen versehen.

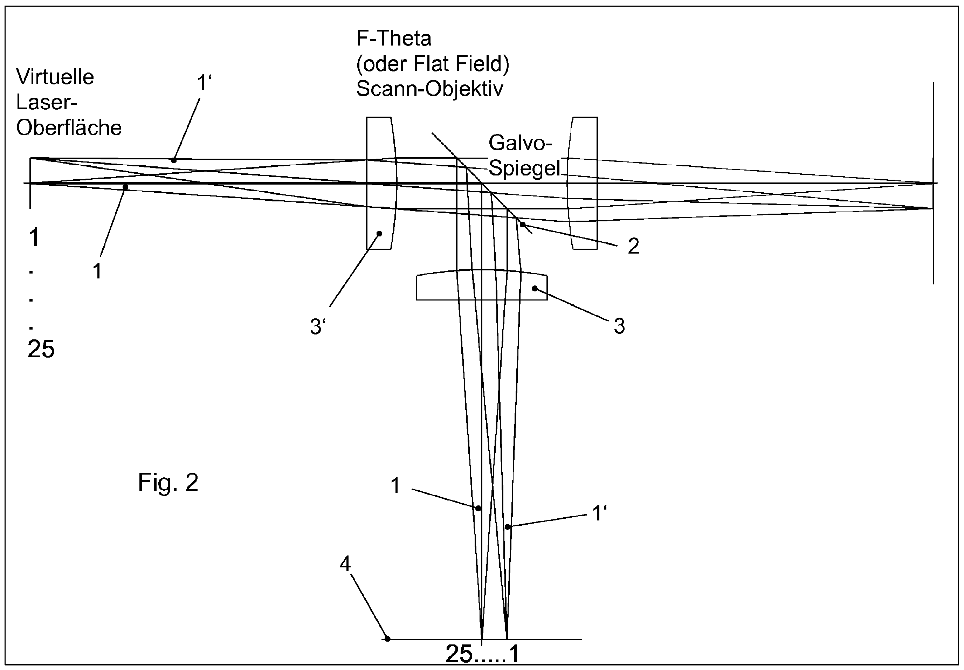

Bei der in Fig. 2 abgebildeten Ausführungsform einer erfindungsgemäßen 3D-Druck-Vorrichtung ist zusätzlich zu der ersten Laserlichtquelle eine zweite Laserlichtquelle vorgesehen, so dass eine zusätzliche Laserstrahlung 1' erzeugt wird. Die Austrittsfläche der zweite Laserlichtquelle ist in einer Ebene senkrecht zur mittleren Ausbreitungsrichtung der Laserstrahlungen 1, 1' zu der Austrittsfläche der ersten Laserlichtquelle beabstandet, insbesondere zwischen 10 µm und 10 mm beispielsweise etwa 100 µm. In der Arbeitsebene 4 treffen die Laserstrahlungen 1, 1' ebenfalls beabstandet zueinander auf (siehe beispielsweise Fig. 2).

Die Ausbreitungsrichtungen der Laserstrahlungen 1, 1' sind etwas zueinander verkippt, so dass sie auf den Spiegeln 2 oder kurz davor oder dahinter etwa zusammen auftreffen. Beide Laserstrahlungen 1, 1' werden von den Spiegeln 2 gleichzeitig und zusammen abgelenkt.

Vor den Spiegeln 2 weist die 3D-Druck-Vorrichtung weitere Optikmittel 3' auf, die insbesondere ebenfalls als F-Theta-Objektiv ausgebildet sein können, beispielsweise den Optikmitteln 3 exakt entsprechen. Es besteht aber durchaus auch die Möglichkeit, anders gestaltete Optikmittel 3' vorzusehen, die beispielsweise eine andere Brennweite als die Optikmittel 3 aufweisen.

Es besteht weiterhin die Möglichkeit, auf die Optikmittel 3' ganz zu verzichten und sowohl die Laserstrahlung 1, als auch die Laserstrahlung 1' als weitgehend kollimierte Laserstrahlung auf die Spiegel 2 auftreffen zu lassen. Auch hier sollten die Ausbreitungsrichtungen der Laserstrahlungen 1, 1'etwas zueinander verkippt sein, so dass sie auf den Spiegeln 2 oder kurz davor oder dahinter etwa zusammen auftreffen.

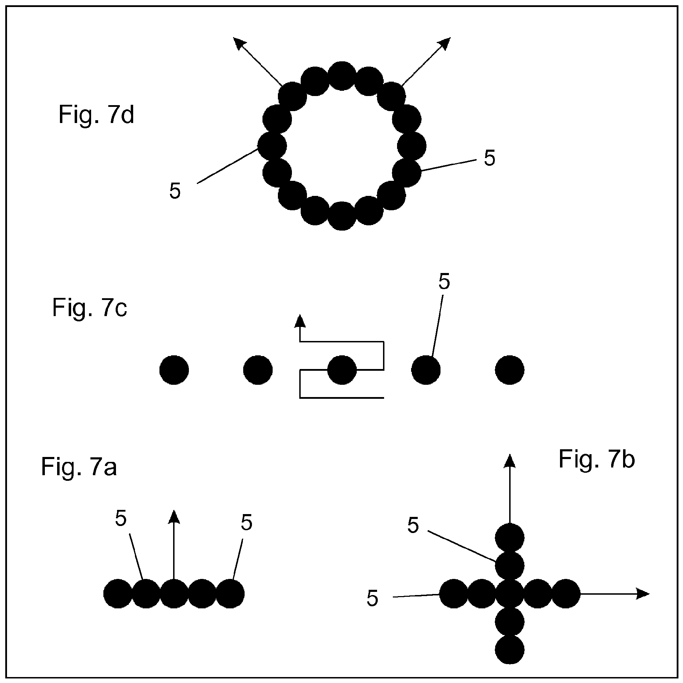

Anstelle zweier Laserlichtquellen können auch mehr als zwei verwendet werden, beispielsweise wie in Fig. 2 angedeutet 25 Laserlichtquellen oder auch mehr als 25 Laserlichtquellen. Fig. 7a bis 7d zeigt die beispielhafte Anordnung der Austrittsflächen 5 von einer Mehrzahl von Laserlichtquellen. Diese sind beispielsweise in einer Reihe (Fig. 7a) oder in Kreuzform (Fig. 7b) angeordnet. Auch eine Kreisform (Fig. 7d) oder eine Reihenform mit größeren Abständen (Fig. 7c) sind abgebildet. Auch andere Anordnungen sind möglich.

Durch beispielsweise mehrere nebeneinander angeordnete Fokuspunkte in der Arbeitsebene 4 kann gleichzeitig an mehreren Stellen das pulverförmige Ausgangsmaterial verfestigt werden, so dass dadurch die Zeit zur Herstellung des Produkts reduziert werden kann. Dies trifft entsprechend auch auf andere Anordnungen der Austrittsflächen der Laserlichtquellen zu.

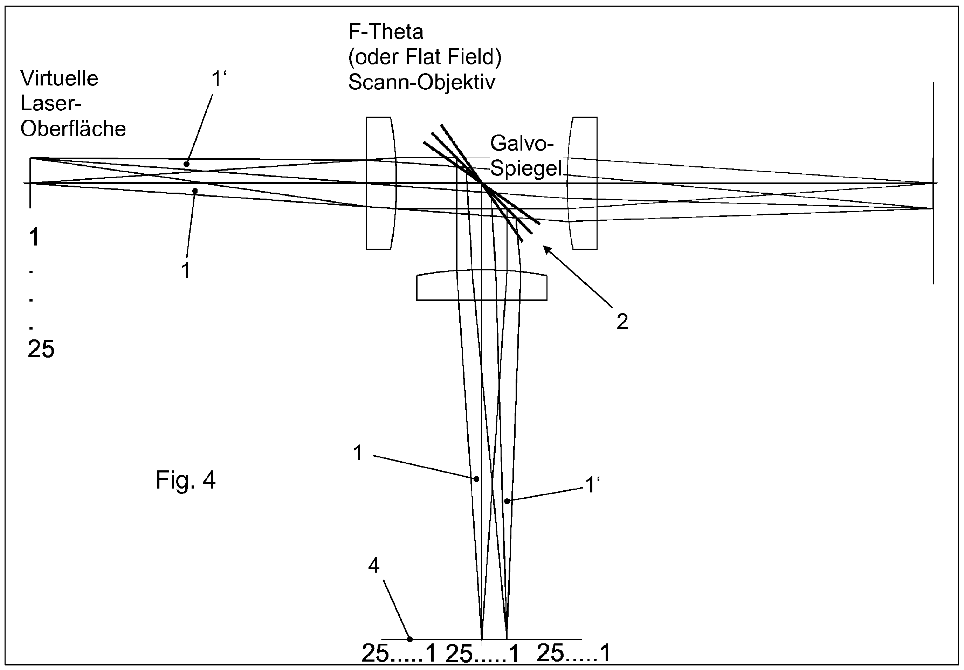

Fig. 4 verdeutlicht, dass die Fokuspunkte der unterschiedlichen Laserstrahlungen 1, 1' in der Arbeitsebene 4 simultan bewegt werden. Dazu sind verschiedene Spiegelstellungen angedeutet.

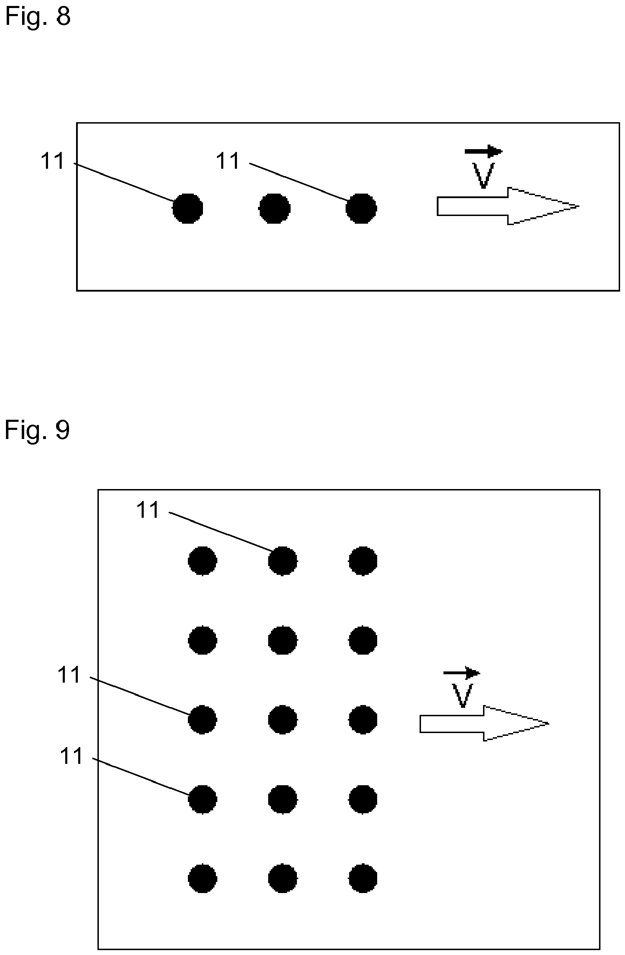

Fig. 8 zeigt eine linienförmige Anordnung von Fokuspunkten 11 in der Arbeitsebene. Diese wird in Linienlängsrichtung bewegt wie durch den Pfeil v angedeutet wird. Durch die Bewegung in Linienlängsrichtung wird ein mit Laserstrahlung zu beaufschlagender Bereich der Arbeitsebene mehrere Male kurz nacheinander mit Laserstrahlung beaufschlagt. Dadurch kann die Einwirkungsdauer des einzelnen Fokuspunkts 11 verkleinert werden, weil durch die sukzessive Beaufschlagung trotzdem ausreichend Energie in den Bereich eingebracht werden kann, um das Ausgangsmaterial beispielsweise aufzuschmelzen.

Auf diese Weise kann die Geschwindigkeit, mit der die Fokuspunkte 11 über die Arbeitsebene bewegt werden, vergrößert werden. Insgesamt kann damit ebenfalls die Bearbeitungszeit verringert werden.

Fig. 9 zeigt ein Ausführungsbeispiel mit einer Anordnung von mehreren zueinander parallelen Linien von Fokuspunkten 11 in der Arbeitsebene. Diese werden ebenfalls in Linienlängsrichtung der parallelen Linien bewegt wie durch den Pfeil v angedeutet wird.

Durch die Bewegung in Längsrichtung der parallelen Linien werden gleichzeitig mehrere mit Laserstrahlung zu beaufschlagende Bereiche der Arbeitsebene mehrere Male kurz nacheinander mit Laserstrahlung beaufschlagt. Dadurch kann die Einwirkungsdauer der einzelnen Fokuspunkte 11 verkleinert werden, weil durch die sukzessive Beaufschlagung trotzdem ausreichend Energie in die Bereiche eingebracht werden kann, um das Ausgangsmaterial beispielsweise aufzuschmelzen.

Im Unterschied zu Fig. 8 geschieht dieses Aufschmelzen bei der Ausführungsform in Fig. 9 parallel in mehreren Bereichen. Insgesamt kann damit die Bearbeitungszeit weiter verringert werden.

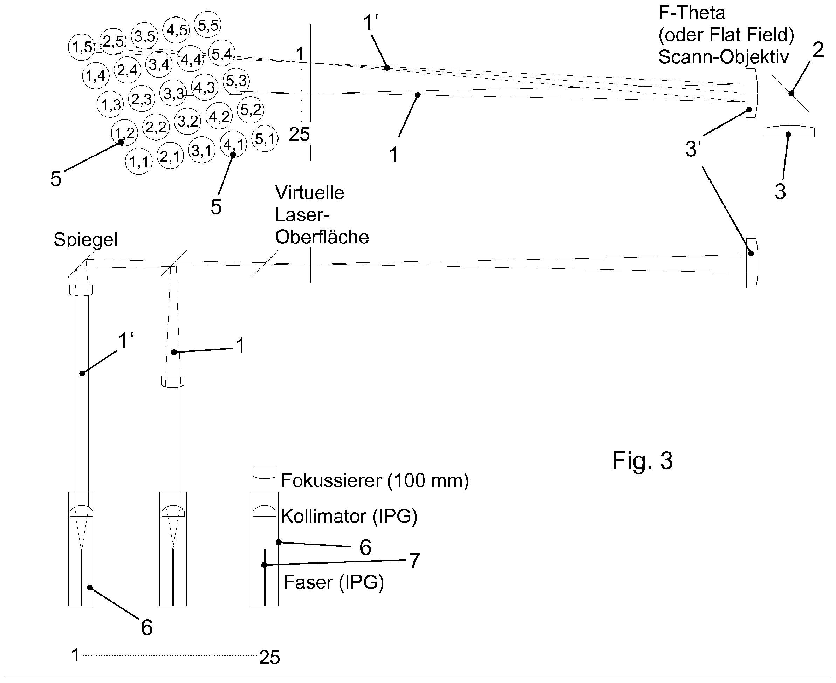

Fig. 3 verdeutlicht, wie mit mehreren, insbesondere 25, schematisch angedeuteten Laserlichtquellen 6 beispielsweise eine rautenförmige Anordnung von mehreren, insbesondere 25, Austrittsflächen für Laserstrahlungen 1, 1', ... geschaffen werden kann.

In dem abgebildeten Ausführungsbeispiel sind die Laserlichtquellen als Austrittsenden von Lichtleitfasern 7 dargestellt. Es besteht durchaus auch die Möglichkeit, andere Laserlichtquellen zu verwenden.

Die Enden der Lichtleitfasern 7 sind in Form eines Bündels mit rautenförmigem Querschnitt angeordnet, wobei die von ihnen ausgehenden Laserstrahlungen 1, 1', ... nach Umlenkung an geeigneten Spiegeln 8 auf die weiteren Optikmittel 3' auftreffen.

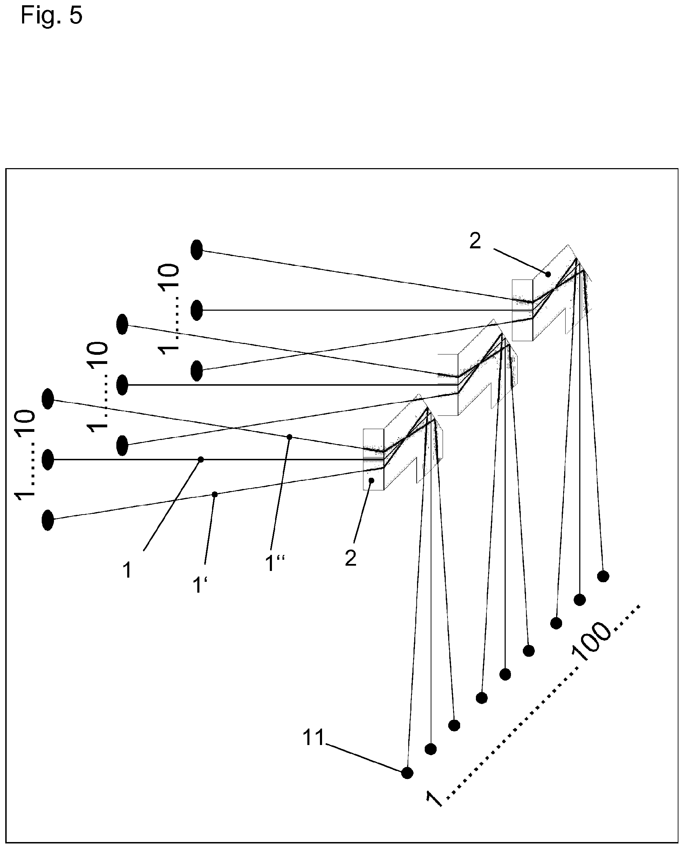

Fig. 5 verdeutlicht, wie durch geeignete Wahl von mehreren Laserlichtquellen und mehreren Laserköpfen mit mehreren Spiegeln 2 und mehreren, nicht abgebildeten Optikmitteln in der Arbeitsebene eine Reihe von beispielsweise mehr als 100 Fokuspunkten 11 erzielt werden kann. Dazu werden eine Mehrzahl von Laserköpfen mit Spiegeln 2 nebeneinander angeordnet und jeweils mit mehreren, beispielsweise 10 Laserstrahlungen 1, 1', 1", ... beaufschlagt. Die Spiegel 2 sind senkrecht zueinander beziehungsweise um zwei zueinander senkrechte Achsen verschwenkbar.

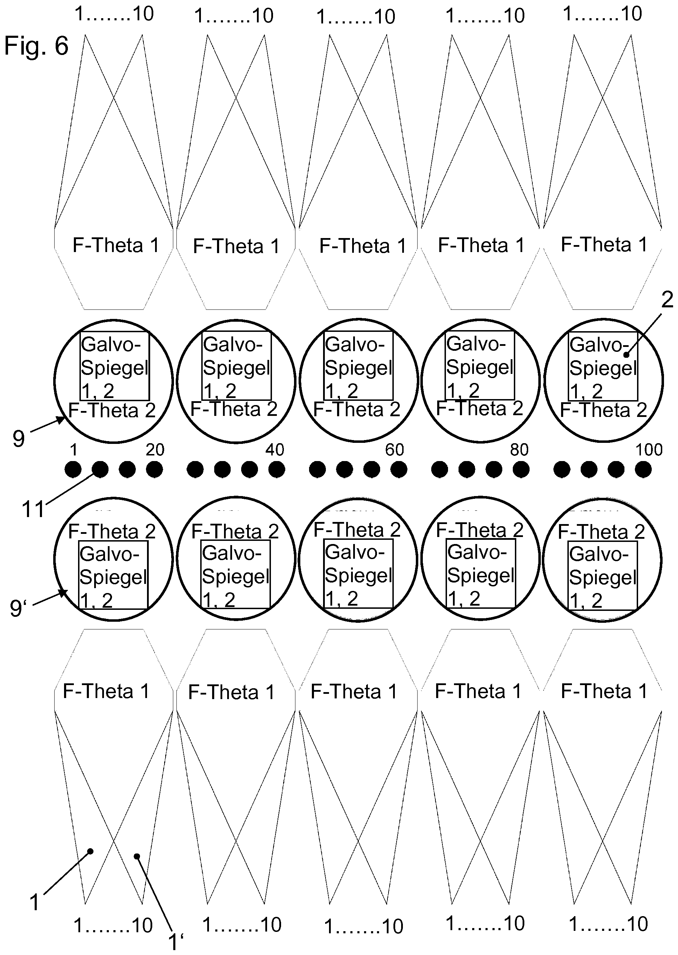

Fig. 6 zeigt eine vergleichbare Anordnung bei der von zwei verschiedenen Seiten Laserstrahlungen 1, 1', ... die hier in zwei zueinander parallelen Reihen 9, 9' angeordneten Spiegel 2 auftreffen. Auch dabei entsteht eine lange Reihe von beispielsweise 100 oder mehr Fokuspunkten 11 in der Arbeitsebene.

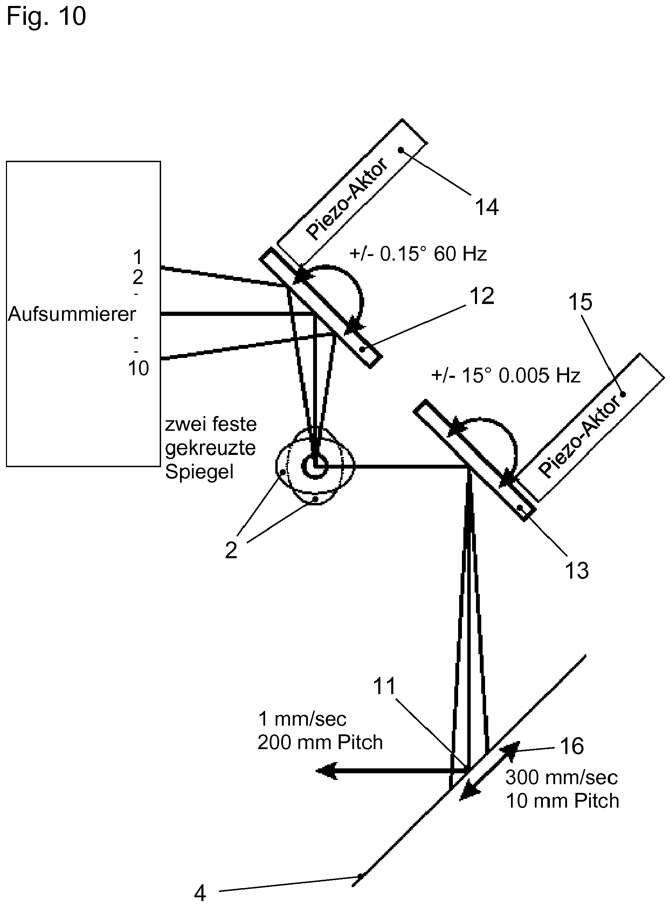

Fig. 10 zeigt eine Anordnung, bei der im Unterschied zu Fig. 5 die zueinander senkrechten Spiegel 2 nicht bewegbar, sondern unbeweglich sind. Ähnlich wie bei Fig. 5 sind jeweils pro Kanal beziehungsweise pro Laserlichtquelle zwei dieser Spiegel 2 vorgesehen.

Um die Fokuspunkte 11 trotz der Unbeweglichkeit der Spiegel 2 in der Arbeitsebene zu bewegen, sind vor unter hinter den Spiegeln 2 jeweils mindestens ein beweglicher Spiegel 12, 13 angeordnet. Diese Spiegel 12, 13 sind länglich ausgebildet und können gleichzeitig mehrere der Laserstrahlungen 1, 1', 1" beziehungsweise sämtliche der Laserstrahlungen ablenken. Insbesondere wird das Verschwenken der Spiegel 12, 13 mit Piezoaktuatoren 14, 15 erreicht.

Dabei bewirkt die Bewegung des ersten Spiegels 12 eine Bewegung der Fokuspunkte 11 in der Längsrichtung 16, in der die Mehrzahl von Fokuspunkten 11 nebeneinander angeordnet sind. Die Bewegung des zweiten Spiegels 13 bewirkt eine Bewegung der Fokuspunkte 11 in einer Richtung senkrecht zu der Längsrichtung 16.

Es zeigt sich, dass der erste Spiegel 12 beispielsweise nur in einem Bereich von ± 0,15° mit einer Frequenz von 60 Hz bewegt werden kann, wohingegen der zweiter Spiegel 13 in einem Bereich von ± 15° mit einer Frequenz von 0,005 Hz bewegt werden kann, um die gewünschten Bewegungen der Fokuspunkte 11 in der Arbeitsebene 4 auszuführen. Aufgrund dieser langsamen Bewegungen beziehungsweise Bewegungen mit geringer Amplitude können anstelle der Galvanospiegel andere Ausführungsformen von Antrieben wie beispielsweise Piezoaktuatoren 14, 15 verwendet werden.

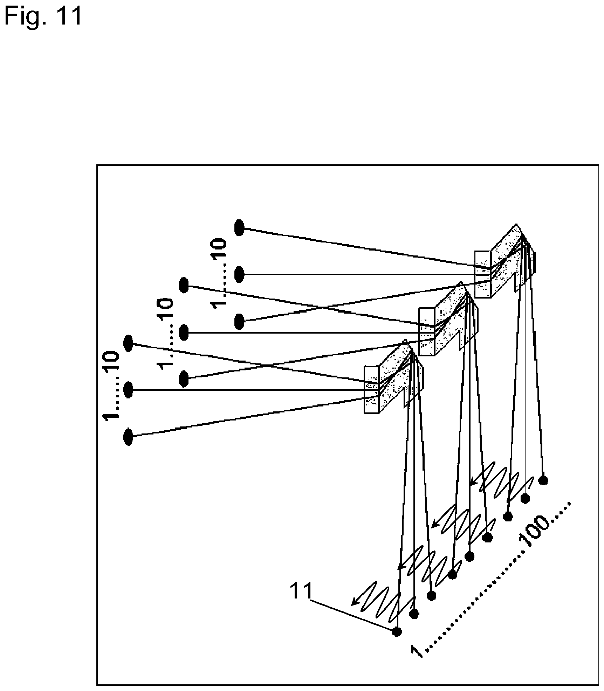

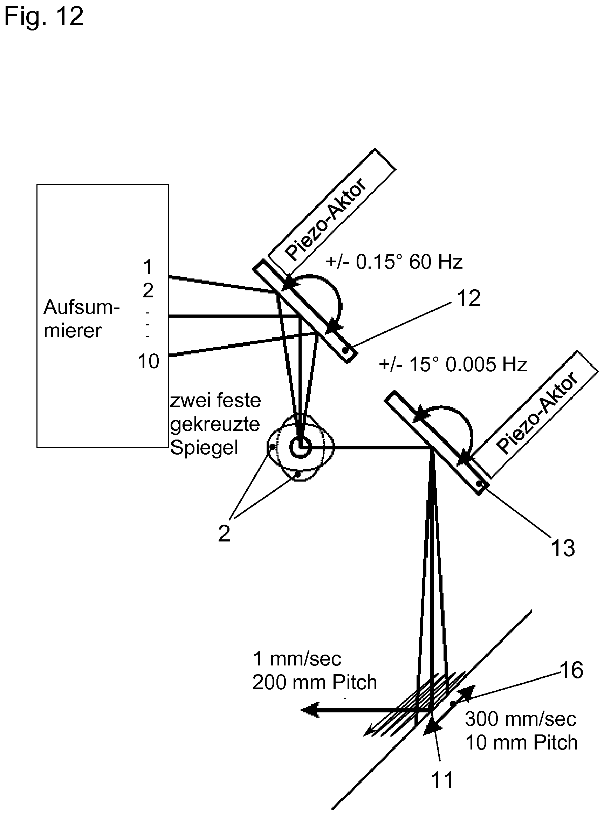

Aus Bewegungen in einer ersten Richtung und einer dazu senkrechten zweiten Richtung kann eine zickzackförmige Bewegung eines Strahls erfolgen. Fig. 11 verdeutlicht schematisch in einer zu Fig. 5 analogen Darstellung die zickzackförmige Bewegung der einzelnen Fokuspunkte 11. Fig. 12 verdeutlicht schematisch in einer zu Fig. 10 analogen Darstellung die zickzackförmige Bewegung der einzelnen Fokuspunkte 11.

## Patentansprüche

1. 3D-Druck-Vorrichtung für die Herstellung eines räumlich ausgedehnten Produkts, umfassend
- mindestens eine Laserlichtquelle, aus der eine Laserstrahlung (1 , 1', 1 ") austreten kann,
- einen Arbeitsbereich (4), dem mit Laserstrahlung (1, 1', 1") zu beaufschlagendes Ausgangsmaterial für den 3D-Druck zugeführt wird oder werden kann, wobei der Arbeitsbereich (4) derart in der 3D-Druck-Vorrichtung angeordnet ist, dass die Laserstrahlung (1, 1', 1 ") auf den Arbeitsbereich (4) auftrifft, sowie
- Scannmittel, die insbesondere als bewegliche Spiegel (2, 12, 13) ausgebildet sind, wobei die Scanmittel die Laserstrahlung (1, 1', 1 ") gezielt gewünschten Orten in dem Arbeitsbereich (4) zuführen können,
**dadurch gekennzeichnet, dass** die mindestens eine Laserlichtquelle so gestaltet ist, dass im Betrieb der Vorrichtung mehrere Auftreffpunkte oder Auftreffbereiche der Laserstrahlung beabstandet zueinander auf dem Arbeitsbereich (4) erzeugt werden.

2. 3D-Druck-Vorrichtung nach Anspruch 1, **dadurch gekennzeichnet, dass** im Betrieb der 3D-Druck-Vorrichtung durch die mehreren zueinander beabstandeten Auftreffpunkte oder Auftreffbereiche der Laserstrahlung in dem Arbeitsbereich (4) gleichzeitig an mehreren Stellen das pulverförmige Ausgangsmaterial verfestigt wird.

3. 3D-Druck-Vorrichtung nach einem der Ansprüche 1 oder 2, **dadurch gekennzeichnet, dass** die Scannmittel mindestens einen beweglichen Spiegel (12, 13) und mindestens einen nicht beweglichen Spiegel (2) umfassen, insbesondere wobei der mindestens eine bewegliche Spiegel (12, 13) größer als der mindestens eine nicht bewegliche Spiegel (2) ist.

4. 3D-Druck-Vorrichtung nach einem der Ansprüche 1 bis 3, **dadurch gekennzeichnet, dass** die 3D-Druck-Vorrichtung mindestens zwei Laserlichtquellen umfasst, aus denen jeweils eine Laserstrahlung (1, 1', 1") austreten kann, insbesondere wobei die Austrittsflächen (5) der mindestens zwei Laserlichtquellen in einer Ebene senkrecht zu der mittleren Ausbreitungsrichtung der Laserstrahlungen (1, 1', 1 ") beabstandet zueinander sind.

5. 3D-Druck-Vorrichtung nach einem der Ansprüche 1 bis 4, **dadurch gekennzeichnet, dass** die Scannmittel eine Mehrzahl von nicht beweglichen Spiegeln (2) umfassen, wobei jeder der Laserstrahlungen (1, 1', 1 ") mindestens einer der nicht beweglichen Spiegel (2) zugeordnet ist.

6. 3D-Druck-Vorrichtung nach einem der Ansprüche 1 bis 5, **dadurch gekennzeichnet, dass** die Scannmittel ein oder mehrere bewegliche Spiegel (12, 13) umfassen, von denen im Betrieb der 3D-Druck-Vorrichtung mehrere der Laserstrahlungen (1, 1', 1"), insbesondere sämtliche der Laserstrahlungen (1, 1', 1 "), abgelenkt werden.

7. 3D-Druck-Vorrichtung nach einem der Ansprüche 1 bis 6, **dadurch gekennzeichnet, dass** die Scannmittel so gestaltet sind, dass die Auftreffpunkte oder Auftreffbereiche der Laserstrahlung auf dem Arbeitsbereich (4) in der Richtung bewegt werden können, in der die Auftreffpunkte oder Auftreffbereiche der Laserstrahlung nebeneinander angeordnet sind.

8. 3D-Druck-Vorrichtung nach einem der Ansprüche 1 bis 7, **dadurch gekennzeichnet, dass** die 3D-Druck-Vorrichtung Optikmittel (3) umfasst, die insbesondere als F-Theta-Objektiv oder Flat-Field-Scanning-Objektive ausgebildet sind und vorzugsweise zwischen den Scannmitteln und dem Arbeitsbereich (4) angeordnet sind, wobei die Optikmittel (3) die Laserstrahlung (1, 1', 1 ") in den Arbeitsbereich (4) fokussieren können.

9. 3D-Druck-Vorrichtung nach einem der Ansprüche 1 bis 8, **dadurch gekennzeichnet, dass** zwischen den mindestens zwei Laserlichtquellen und den Scannmitteln zusätzliche Optikmittel (3') angeordnet sind.

10. 3D-Druck-Vorrichtung nach Anspruch 9, **dadurch gekennzeichnet, dass** die zusätzlichen Optikmittel (3') den zwischen den Scannmitteln und dem Arbeitsbereich angeordneten Optikmitteln (3) ähneln oder entsprechen, insbesondere dass die zusätzlichen Optikmittel (3') ebenfalls als F-Theta-Objektiv oder Flat-Field-Scanning-Objektive ausgebildet sind.

11. 3D-Druck-Vorrichtung nach einem der Ansprüche 1 bis 8, **dadurch gekennzeichnet, dass** zwischen den mindestens zwei Laserlichtquellen und den Scannmitteln keine weiteren Optikmittel angeordnet sind.

12. 3D-Druck-Vorrichtung nach einem der Ansprüche 1 bis 11, **dadurch gekennzeichnet, dass** die Laserstrahlung (1, 1', 1 ") aus den mindestens zwei Laserlichtquellen weitgehend kollimiert austritt.

13. 3D-Druck-Vorrichtung nach einem der Ansprüche 1 bis 12, **dadurch gekennzeichnet, dass** die mittleren Ausbreitungsrichtung der aus unterschiedlichen der mindestens zwei Laserlichtquellen austretenden Laserstrahlungen (1, 1', 1") einen Winkel miteinander einschließen, insbesondere einen kleinen Winkel von beispielsweise weniger als 10°.

14. 3D-Druck-Vorrichtung nach einem der Ansprüche 1 bis 13, **dadurch gekennzeichnet, dass** die Laserlichtquellen als Enden von Lichtleitfasern (7) ausgebildet sind.

15. 3D-Druck-Vorrichtung nach einem der Ansprüche 1 bis 14, **dadurch gekennzeichnet, dass** die Laserlichtquellen als Laservorrichtungen ausgebildet sind.
